# EUROPÄISCHE PATENTSCHRIFT

(11) **EP 1 681 495 B1**
(45) Veröffentlichungstag und Bekanntmachung des Hinweises auf die Patenterteilung: **16.07.2008**
(21) Anmeldenummer: 05026678.2
(22) Anmeldetag: 07.12.2005
(51) Int. Cl.: F16H 57/02, F02B 61/02

(54) **Antriebseinrichtung mit Getriebe**
Drive assembly with transmission
Dispositif d'entraînement avec une transmission

(30) Priorität: 14.01.2005 DE 102005001872
(43) Veröffentlichungstag der Anmeldung: 19.07.2006
(73) Patentinhaber: Bayerische Motorenwerke Aktiengesellschaft, 80809 München (DE)
(72) Erfinder: Platz, Christoph, 80797 München (DE)

(56) Entgegenhaltungen:
- DE-A1- 3 302 844
- DE-A1- 10 100 562
- US-A- 4 723 619

## Beschreibung

Die Erfindung betrifft eine Antriebseinrichtung umfassend eine Brennkraftmaschine mit einer Kurbelwelle und eine mittels der Brennkraftmaschine antreibbare Getriebeeinrichtung mit einer ersten und einer zweiten Getriebewelle in einem vertikal geteilten Maschinengehäuse, entsprechend dem Oberbegriff des Anspruchs 1 und wie aus der DE 10100562 A bekannt ist.

Bei derartigen Antriebseinrichtungen mit einer Brennkraftmaschine und einem im selben Maschinengehäuse integrierten Getriebe mit zwei Getriebewellen, welche Übersetzungsstufen bildende Zahnradpaare tragen, sind üblicherweise sowohl die Kurbelwelle als auch die Getriebewellen übereinander im Bereich der vertikalen Trennebene angeordnet.

In diesem Zusammenhang wird auf die DE 27 46 669 A1 sowie auf die DE 33 02 844 A1 verweisen, welche Brennkraftmaschinen in Boxerbauweise mit integriertem Getriebe zeigen. Das Maschinengehäuse ist jeweils mittig vertikal in zwei Hälften geteilt, unterhalb der Kurbelwellen ist eine erste und eine zweite Getriebewelle angeordnet, wobei zur Aufnahme der Wellen im Bereich der Trennebene Ausnehmungen zur Aufnahme bzw. Lagerung der Wellen vorgesehen sind. Eine derartige Anordnung benötigt in vertikaler Richtung einen großen Bauraum und bedingt einen gewissen Montageaufwand.

Der Erfindung liegt daher die Aufgabe zugrunde, eine eingangs genannte Antriebseinrichtung noch kompakter auszugestalten, insbesondere die Bauhöhe zu optimieren und die Montage zu vereinfachen.

Die Lösung der Aufgabe erfolgt mit den Merkmalen des Anspruchs 1, wobei erfindungsgemäß vorgeschlagen wird, die erste Getriebewelle in einer ersten Hälfte des Maschinengehäuses und die zweite Getriebewelle in einer zweiten Hälfte des Maschinengehäuses anzuordnen. Durch diese Kompakte Anordnung kann die Bauhöhe der Antriebsanordnung verringert werden, zudem ist die Montage der Getriebewellen einfacher und die Prozesssicherheit verbessert.

Besonders vorteilhafte Ausgestaltungen und Weiterbildungen der Erfindung sind Gegenstand der Unteransprüche.

Gemäß eines besonders zu bevorzugenden Ausführungsbeispiels der Erfindung ist die erste Getriebewelle eine mittels der Brennkraftmaschine antreibbare Getriebeeingangswelle und die zweite Getriebewelle eine zu dieser gegenläufig drehende Getriebeausgangswelle, wobei zwischen Getriebeeingangs- und Getriebeausgangswelle Übersetzungsstufen bildende Zahnradpaarungen angeordnet sind.

Sehr vorteilhaft ist es, wenn zur Aufnahme der Getriebewellen die Maschinengehäusehälften zur vertikalen Trennebene hin geöffnete Lagerschalen umfassen. Zweckmäßigerweise sind zur Festlegung der Getriebewellen in den Lagerschalen Leichtbaulagerdeckel vorgesehen. Beim Betrieb der erfindungsgemäßen Antriebsanordnung ergibt sich an den Getriebewellen jeweils eine resultierende Kraft, welche die Getriebewellen seitwärts in die Lagerschalen in den Maschinengehäusehälften drückt. Entsprechend leicht können die Lagerdeckel sowie deren Befestigung, wie Verschraubung, zur Festlegung der Getriebewellen ausgestaltet sein, sodass das Gesamtgewicht der Antriebsanordnung reduziert werden kann und insbesondere ein nur geringer Bauraum erforderlich ist.

Nachfolgend wird ein besonders zu bevorzugendes Ausführungsbeispiel der Erfindung unter Bezugnahme auf Figuren näher erläutert, dabei zeigen schematisch und beispielhaft
- Figur 1a: eine Antriebseinrichtung mit Getriebe in isometrischer Ansicht,
- Figur 1b: eine Antriebseinrichtung mit Getriebe in isometrischer Ansicht,
- Figur 2a: eine Antriebseinrichtung mit Getriebe in Frontansicht,
- Figur 2b: eine Antriebseinrichtung mit Getriebe in Rückansicht und
- Figur 3: eine Antriebseinrichtung mit Getriebe in einem Maschinengehäuse in isometrischer Ansicht.

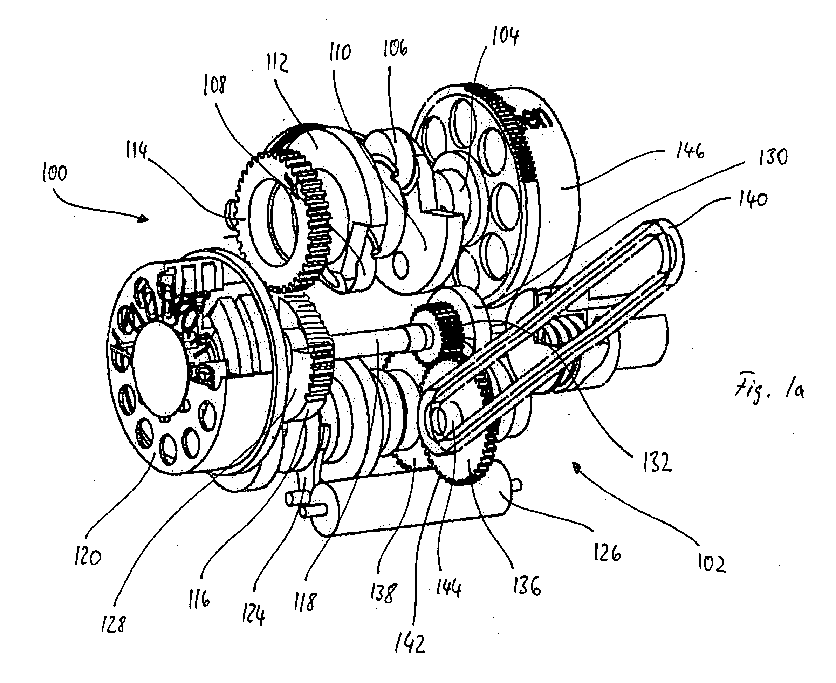

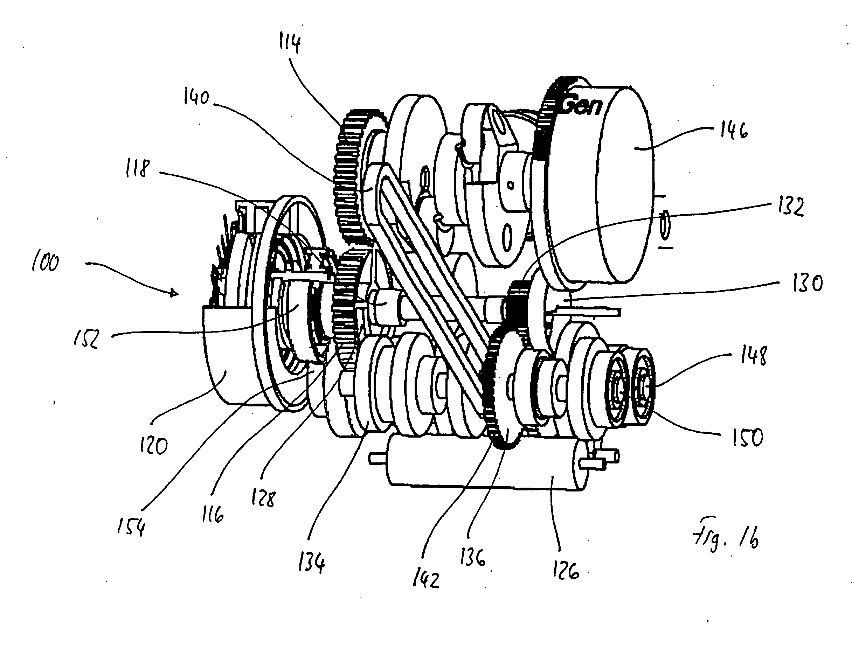

Gemäß Figur 1a und 1b umfasst eine hier nur auszugsweise dargestellte Antriebseinrichtung eine Brennkraftmaschine 100 in Boxerbauweise mit zwei einander gegenüber liegende Zylinder und diesen zugeordnete Zylinderköpfen, wobei jeder Zylinderkopf eine Einrichtung, wie 102, zur Betätigung von Gaswechselventilen mittels Nockenwellen aufweist. In einem Brennkraftmaschinengehäuse ist eine Kurbelwelle 104 mit zwei um 180°-Kurbelwinkel gegeneinander versetzt angeordneten Kurbelzapfen 106, 108 und Gegengewichten 110, 112 zum Massenausgleich aufgenommen. Endseitig ist mit der Kurbelwelle 104 ein Zahnrad 114 drehfest verbunden, welches mit einem mit einer in der senkrechten Gehäuseteilung unter der Kurbelwelle 104 liegenden Zwischenwelle 118 ebenfalls drehfest verbundenen Zahnrad 116 in Eingriff steht. Das dem Zahnrad 114 entgegengesetzte Ende der Kurbelwelle ist einem Generator 146 zugeordnet, welcher gegebenenfalls auch als Motor zum Antrieb der Kurbelwelle 104 und somit zum Starten der Brennkraftmaschine 100 betreibbar ist.

Die Zwischenwelle 118 dreht mit Kurbelwellendrehzahl zu dieser entgegengesetzt und dient zugleich als Ausgleichswelle mit Ausgleichsgewichten 128, 130 zum Ausgleich von Schwingungen der Brennkraftmaschine 100. Endseitig ist die Zwischenwelle 118 mit dem Eingangsteil einer als Reibungskupplung ausgebildeten Anfahrkupplung 120 drehfest verbunden, deren Ausgangsteil über eine mit einer Zahnradpaarung 152, 154 gebildete Übersetzung in Langsame eine von zwei unterhalb der Zwischenwelle 118 in den Maschinengehäusehälften angeordnet Getriebewellen 148, 150 antreibt. Durch die Vergrößerung der Masse der Zwischenwelle 118 um die Masse des Eingangsteils der Kupplung 120 wird ohne zusätzlichen Bauaufwand der Massenausgleich in seiner Wirkung erhöht.

Die Getriebewellen 148, 150 tragen Übersetzungsstufen bildende Zahnradpaarungen, wie 134, welche jeweils ein auf einer Getriebewelle drehbares Losrad und ein auf der anderen Getriebewelle drehfest angeordnetes Festrad umfassen. Um eine Zahnradpaarung, wie 134, als wirksame Übersetzungsstufe zu schalten, ist das jeweilige Losrad mit der es tragenden Getriebewelle drehfest verbindbar. Die Schaltung erfolgt mittels schaltgabelbetätigter Schaltkupplungen, wie 124, welche durch Drehung einer Schaltwalze 126 betätigbar sind.

Die Drehrichtung der Zwischenwelle 118 und somit auch der Kupplung 120 entgegen der Kurbelwelle 104 verringert vorteilhafterweise auch das Rückstellmoment der Brennkraftmaschine. Sehr zweckmäßig ist es, wenn alle Losräder der Zahnradpaarungen auf der Getriebeeingangswelle 148 und alle korrespondierenden Festräder auf der Getriebeausgangswelle 150 sitzen, um ein Leerlaufklappern zu verringern.

Mit der Zwischenwelle 118 ist drehfest ein Zahnrad 132 verbunden, welches mit auf den Getriebewellen 148, 150 frei drehbar angeordneten Doppelzahnrädern 136, 138 korrespondiert. Die Doppelzahnräder 136, 138 weisen auf einem großen Durchmesser eine erste Verzahnung, wie 144, und auf einem kleinen Durchmesser und eine zweite Verzahnung, wie 142, auf, wobei das Zahnrad 132 mit der dem großen Durchmesser zugeordneten ersten Verzahnung, wie 144, in Eingriff steht, sodass die Doppelzahnräder 136, 138 vorliegend mit halber Kurbelwellendrehzahl rotiert. Die dem kleinen Durchmesser zugeordneten zweiten Verzahnungen, wie 142, treiben Steuerelemente, wie Steuerriemen oder Steuerkette 140, zum Antrieb von den Zylinderköpfen zugeordneten Nockenwelle zur Betätigung der Gaswechselventile an. Die Doppelzahnräder 136, 138 sind auf den Getriebewellen 148, 150 vorzugsweise wälzgelagert, gegebenenfalls kann es jedoch auch zweckmäßig sein, Gleitlagerungen vorzusehen.

Die Doppelzahnräder 136, 138 sind vorliegend einstückig ausgebildet, wobei die erste und zweite Verzahnung in axialer Richtung voneinander beabstandet sind und zur Herstellung der zweiten Verzahnung und für das Steuerelement zwischen den Verzahnungen ein Freistich gebildet ist. Gegebenenfalls kann es jedoch auch vorteilhaft sein, die Doppelzahnräder 136, 138 zu bauen, also aus einem kleinen und einem großen Zahnrad zusammenzusetzen. In diesem Fall weist entweder eines der Zahnräder einen in axialer Richtung zum anderen Zahnrad gerichteten Bund auf oder es ist zwischen den Zahnrädern ein Distanzstück vorgesehen. Die Zahnräder und ggf. das Distanzstück sind drehfest miteinander verbunden, beispielsweise formschlüssig mittels eines Passstifts.

Um einer Durchbiegung der Getriebewellen 148, 150 entgegenzuwirken und um diese länger ausführen zu können, was aufgrund der auf den Getriebewellen 148, 150 zusätzlich angeordneten Doppelzahnrädern 136, 138 erforderlich ist, sind die Getriebewellen 148, 150 mehrfach, insbesondere dreifach, gelagert, wobei die Doppelzahnräder 136, 138 vorliegend zwischen der zweiten und dritten Lagerstelle unmittelbar benachbart der dritten Lagerstelle angeordnet sind. Auf diese Weise können die Kräfte des Nockenwellenantriebs auf kurzem Weg am Gehäuse abgestützt werden, ohne dass die Getriebewellen 148, 150 einer übermäßig großen zusätzlichen Belastung ausgesetzt werden.

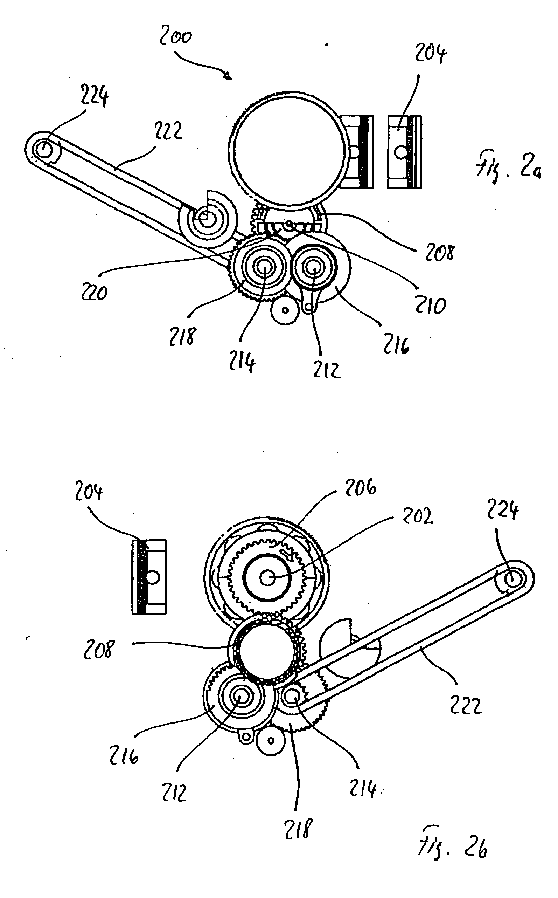

Eine Frontansicht der in den Figuren 1 a und 1 b gezeigten Einrichtung 200 mit Getriebe ist in Figur 2a dargestellt, eine Rückansicht zeigt Figur 2b. Mit einer Kurbelwelle 202 sind mittels Pleuel Kolben, wie 204, verbunden, wobei in der Figur 2a ein Kolben 204 in einer oberen und in einer unteren Lage dargestellt ist. Ausgehend von der Kurbelwelle 202 ist über eine durch Zahnräder 206, 208 gebildete Zahnradstufe mit einer 1 :1-Übersetzung eine auch als Ausgleichswelle dienende Zwischenwelle 210 antreibbar. Unterhalb der Zwischenwelle 210 sind nebeneinanderliegend eine Getriebeeingangswelle 212 und eine Getriebeausgangswelle 214 angeordnet, wobei die Getriebeeingangswelle 212 von der Zwischenwelle 210 über eine Kupplung antreibbar ist. Auf den Getriebewellen 212, 214 sind frei drehbar Doppelzahnräder 216, 218 wälzgelagert, welche jeweils eine erste Verzahnung auf einem großen Durchmesser und eine zweite Verzahnung auf einem kleinen Durchmesser aufweisen. Mit der Zwischenwelle 210 ist drehfest ein Zahnrad 220 verbunden, das mit den ersten Verzahnungen der Doppelzahnräder 216, 218 in Eingriff steht. Die zweiten Verzahnungen treiben Steuerelemente, wie Steuerketten 222, zum Antrieb von in den Zylinderköpfen angeordneten Nockenwellen, wie 224, an.

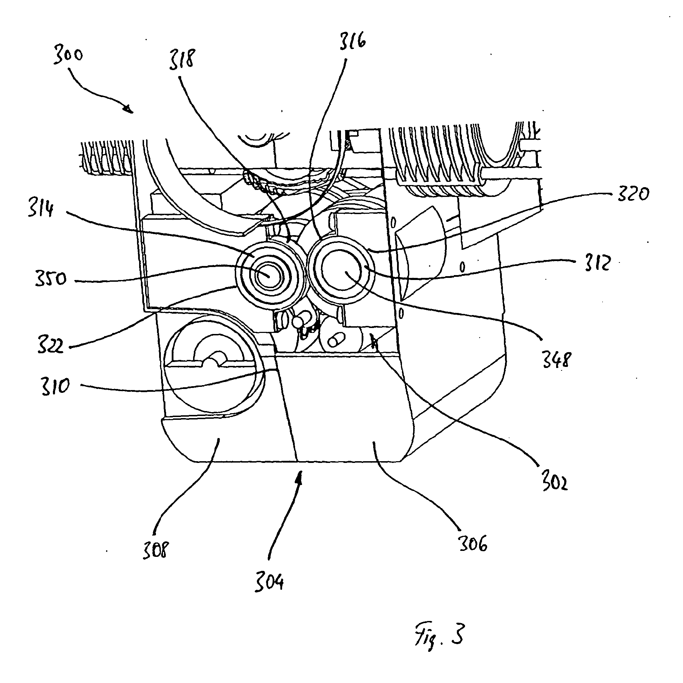

Figur 3 zeigt eine Antriebseinrichtung 300 mit Getriebe 302 in einem Maschinengehäuse 304 in isometrischer Ansicht. Das Maschinengehäuse 304 der Antriebseinrichtung 300 ist längs geteilt, wobei die Kurbelwelle 104 (Fig. 1) und die darunter liegende Zwischenwelle 118 (Fig. 1) im Bereich der vertikalen Trennebene 310 gelagert sind. Die mittels Lagern 312, 314 gelagerten Getriebewellen 348, 350 werden bei der Montage der Brennkraftmaschine in die rechte bzw. linke Gehäusehälfte 306, 308 in zur Trennebene hin geöffnete Lagerschalen 320, 322 eingelegt und mittels Lagerdeckeln 316, 318 fixiert, dann werden die Gehäusehälften 306, 308 zusammengefügt. Sehr von Vorteil ist bei der vorliegenden Anordnung, dass beim Betrieb der Antriebseinrichtung 300 die auf die Getriebewellen 348, 350 nach außen, also die Getriebewellen 348, 350 auseinanderdrückende, resultierende Kraftkomponente die Getriebewellen 348, 350 in die gehäuseseitigen Lagerschalen 320, 322 drückt. Die inneren Lagerdeckel 316, 318 können daher sowohl konstruktiv als auch von der Materialauswahl her besonders leicht ausgeführt werden. Beispielsweise können die Lagerdeckel 316, 318 als Blech, Kunststoff, Leichtmetall(guß) bestehen und/oder es kann auf besondere Verstärkungsmaßnahmen, wie Versteifungsrippen, verzichtet werden.

## Patentansprüche

1. Antriebseinrichtung für ein Kraftfahrzeug umfassend eine Brennkraftmaschine (100) mit einer Kurbelwelle (104, 202) und eine mittels der Brennkraftmaschine (100) antreibbare Getriebeeinrichtung mit einer ersten Getriebewelle (148, 348) und einer zweiten Getriebewelle (150, 350), **dadurch gekennzeichnet, dass** die Brennkraftmaschine (100) und die Getriebeeinrichtung in einem gemeinsamen, vertikal geteilten Maschinengehäuse (304) angeordnet sind, wobei die erste Getriebewelle (148, 348) in einer ersten Hälfte (306) des Maschinengehäuses (304) und die zweite Getriebewelle (150, 350) in einer zweiten Hälfte (308) des Maschinengehäuses (304) angeordnet ist.

2. Antriebseinrichtung nach Anspruch 1, **dadurch gekennzeichnet**, das die erste Getriebewelle (148, 348) eine mittels der Brennkraftmaschine (100) antreibbare Getriebeeingangswelle und die zweite Getriebewelle (150, 350) eine zu dieser gegenläufig drehende Getriebeausgangswelle ist, wobei zwischen Getriebeeingangs- und Getriebeausgangswelle Übersetzungsstufen bildende Zahnradpaarungen angeordnet sind.

3. Antriebseinrichtung nach einem der Ansprüche 1 oder 2, **dadurch gekennzeichnet**, das zur Aufnahme der Getriebewellen (148, 150, 348, 350) die Maschinengehäusehälften (306, 308) zur vertikalen Trennebene (310) hin geöffnete Lagerschalen (320, 322) umfassen.

4. Antriebseinrichtung nach einem der vorhergehenden Ansprüche, **dadurch gekennzeichnet, dass** zur Festlegung der Getriebewellen (148, 150, 348, 350) in den Lagerschalen (320, 322) Leichtbaulagerdeckel (316, 318) vorgesehen sind.

## Claims

1. A drive device for a motor vehicle comprising an internal combustion engine (100) having a crankshaft (104, 202) and a gear device drivable by the engine (100) and comprising a first gear shaft (148, 348) and a second gear shaft (150, 350), **characterised in that** the engine (100) and the gear device are disposed in a common vertically divided engine casing (304), wherein the first gear shaft (148, 348) is disposed in a first half (306) of the engine casing (304) and the second gear shaft (150, 350) is disposed in a second half (308) of the engine casing (304).

2. A drive device according to claim 1, **characterised in that** the first gear shaft (148, 348) is a gear input shaft drivable by the engine (100) and the second gear shaft (150, 350) is a gear output shaft rotating in the opposite direction to the first gear shaft, wherein pairs of gearwheels forming transmission stages are disposed between the gear input shaft and the gear output shaft.

3. A drive unit according to claim 1 or claim 2, **characterised in that** in order to hold the gear shafts (148, 150, 348, 350) the halves (306, 308) of the machine casing comprise bearing shells (320, 322) which open towards the vertical parting plane (310).

4. A drive device according to any of the preceding claims, **characterised in that** lightweight bearing covers (316, 318) are provided in the bearing shells (320, 322) for fastening the gear shafts (148, 150, 348, 350).

## Revendications

1. Installation d'entraînement d'un véhicule automobile comprenant un moteur à combustion interne (100) équipé d'un vilebrequin (104, 102) et d'une installation de transmission entraînée par le moteur à combustion interne (100) ayant un premier arbre de transmission (148, 348) et un second arbre de transmission (150, 350),
**caractérisée en ce que**
le moteur à combustion interne (100) et l'installation de transmission sont logés dans un carter de moteur (304) commun, divisé verticalement,
le premier arbre de transmission (148, 348) étant logé dans une première moitié (306) du carter de moteur (304) et le second arbre de transmission (150, 350) étant logé dans une seconde moitié (308) du carter de moteur (304).

2. Installation d'entraînement selon la revendication 1,
**caractérisée en ce que**
le premier arbre de transmission (148, 348) est l'arbre d'entrée d'une boîte de vitesses entraînée par le moteur à combustion interne (100) et le second arbre de transmission (150, 350) est l'arbre de sortie de la boîte de vitesses, tournant en sens opposé du précédent, et entre l'arbre d'entrée de boîte de vitesses et l'arbre de sortie de boîte de vitesses il y a des paires de pignons dentés formant des étages de démultiplication.

3. Installation d'entraînement selon l'une des revendications 1 ou 2,
**caractérisée en ce que**
les moitiés de carter de moteur (306, 308) ont des coupelles de palier (320, 322) ouvertes par rapport au plan de séparation vertical (310) pour recevoir les arbres de transmission (148, 150, 348, 350).

4. Installation d'entraînement selon l'une des revendications précédentes,
**caractérisée en ce que**
les coupelles de palier (320, 322) ont des chapeaux de palier en construction légère (316, 318) pour fixer les arbres de transmission (148, 150, 348, 350).
